# EUROPEAN PATENT SPECIFICATION

(11) **EP 2 148 143 B1**
(45) Date of publication and mention of the grant of the patent: **27.01.2016**
(21) Application number: 09380138.9
(22) Date of filing: 20.07.2009
(51) Int. Cl.: F24D 17/00, F24D 17/02, F24D 19/08, A45D 20/00

(54) **Electrical appliance producing hot water**
Elektrisches Gerät für die Wassererwärmung
Appareil électrique pour chauffer de l'eau

(30) Priority: 21.07.2008 ES 200802166 P; 30.12.2008 ES 200803756 P
(43) Date of publication of application: 27.01.2010
(73) Proprietor: González Valiente, César, 46680 Algemesi Valencia (ES); Calzada Forés, José Manuel, 46680 Algemesi Valencia (ES)
(72) Inventor: González Valiente, César, 46680 Algemesi Valencia (ES); Calzada Forés, José Manuel, 46680 Algemesi Valencia (ES)
(74) Representative: Carvajal y Urquijo, Isabel

(56) References cited:
- EP-A1- 1 724 531
- WO-A1-2006/074572
- FR-A1- 2 486 060
- JP-A- 2002 089 957

## Description

### FIELD OF THE INVENTION

The present invention refers to the field of electrical appliances, refrigerator equipments, renewable energy use and waste water reuse. Specifically, the invention refers to improvements of the patent 200802166, relating to an electrical appliance producing hot water.

### BACKGROUND OF THE INVENTION

It is known the effect of the heat pump which can transport heat energy from a cold source to a hot one.

It is known that transporting heat from a cold source to a heat source from the point of view of energy efficiency is more energetically profitable and therefore, more economical than generating it by Joule effect.

It is known the use of heat pumps to produce sanitary hot water, which use sanitary hot water as heat source and which can use as cold source the exterior environment, cooling water from acclimatization systems that use water, underground water or others.

There are known patents that use the heat from household refrigerator condensers to heat sanitary hot water, transporting said heat to the hot water tank 35-60ºC (Temperatures which are much higher than those of tap water, with an average of 15ºC).

There are known techniques to reuse heat from refrigerator condensers to produce hot water for dishwashers and washer machines (Temperatures which are higher than those of tap water, with an average of 15ºC).

It is known that refrigerator equipments increase energy consumption when there is an increase in the temperature difference between the cold tank and the heat tank.

It is also known that the electrical demand in the water supply system suffers night drops due to the fall of industrial production, so it is possible to consider it residual energy of the system; in fact there are tariffs that taking this fact into account offer discounts on consumption during certain daytime hours and penalize consumption when the consumption in the system is higher.

It is known that there are schedule control devices that enable to choose the moment when we want electrical appliances to work.

In all households there is consumption of cold and hot water and which, although it is not simultaneous, it is produced along the day.

There exist energy saving techniques based on reusing solar thermal energy or other renewable energy forms, their application being compulsory according to some laws in new constructions, demanding a facilities design that guarantees a production minimum of 70% (this minimum percentage being variable) of the average consumption per household along the year.

The investment return period of a solar thermal installation for the generation of sanitary hot water, ranges between 8 and 10 years.

There exist techniques to reuse water from showers, bathtubs and other grey water, which are based on treatment and recycling for their reuse as non-drinking water, such as toilets, washing machines, irrigation, cleaning, etc.

There exist techniques and devices to generate osmotized water for household consumption, with subsequent savings in the water bill in supermarkets and energy savings in the generation, distribution and transportation of bottled spring water to households.

The equipments to generate osmotized water produce two flows, one flow of osmotized water and another flow of rejected water which goes mainly to drainage with the subsequent water loss and consumption increase.

For all of the above, the present invention focuses on an electrical appliance capable of important savings in the generation of sanitary hot water and which will optionally allow the coupling of other electrical appliances to increase its energy efficiency and reuse rejected water from reverse osmosis without any need of sending it to drainage systems, as well as drainage water from showers, bathtubs, sinks in particular or the so-called grey water in general.

WO2006074572 discloses a hot and cold water dispenser that includes a compressor, a radiator, a pressure-reducing mechanism, and an evaporator all connected in series to define a refrigerating cycle, in which a refrigerant that operates in a supercritical state is filled. The radiator is accommodated in a hot water tank, while the evaporator is accommodated in a cold water tank. This document discloses an appliance according to the preamble of claim 1.

EP1724531 discloses a system that has a heat pump device with an evaporator integrated to a used water storage reservoir for heating the sanitary or industrial water. The reservoir integrates a submerged pump which circulates the hot water with the evaporator for extracting heat by the heat pump which transfers the heat to the water by a capacitor of the pump. An anti-eddy plate is situated inside the reservoir to diffuse cold water in the evaporator to the bottom of the reservoir in a controlled manner for thermal stratification of the water in the reservoir.

JP2002089957 provides a warm water and chilled water supplying system capable of generating not only warm water but also chilled water by a CO2 hot water supply unit. JP2002089957 discloses a warm water and chilled water supplying system that comprises a hot water supply unit, a refrigerator having a CO2 as a heating medium, and a water cooling unit in combination. In this case, the water to be supplied to the unit is heated by a radiator of the CO2 to generate the warm water. The water to be supplied to the unit is cooled by an evaporator of the CO2 to generate the chilled water. The warm water output from the unit and the chilled water output from the unit are guided to a mixing cock, and hence only the warm water or the chilled water or a mixed water obtained by mixing the warm water and the chilled water of a predetermined temperature can be obtained.

### DESCRIPTION OF THE INVENTION

Electrical appliance producing sanitary hot water with an energy saving system, consisting of the extraction of heat from a cold water buffer tank which is constantly renewed with the drainage of some of the so-called grey water, and which transports the heat to another sanitary hot water tank for household consumption, all of which is carried out with the help of a refrigerator equipment and the necessary mechanisms.

The invention comprises the set of mechanisms and elements which make possible the generation of sanitary hot water in an electrical appliance with primary energy savings of up to 75% and consumption water savings of up to 30% without needing any installation or complex elements which increase costs and make the amortization of the equipment non-viable.

The simplicity of the invention allows for economy of scale manufacturing, mass production, with reduced dimensions which are suitable for any household and can be easily installed, with technical characteristics which allow, as a whole, and some of them separately, for important energy savings in the household. The invention carries out the following functions.
1. Sanitary hot water heating system by heat pump, transporting the heat from grey water drainage of a household to the hot water allowing energy savings of up to 75%.
2. Sanitary hot water accumulator.
3. Free environment refrigerator in summer through the reuse of the cold water produced in the generation of heat for sanitary hot water.
4. Selection of the moment of electrical consumption, to reuse electrical energy when there exist excess supply in the electric-power system (off-peak tariffs) which allows savings of up to 45% in electricity bills.
5. Regenerator of the waste heat from water from the drainage of dishwashers, washing machines, sinks, showers, bathtubs and basins.
6. Exchanger installed in the cold water tank of the electrical appliance which will allow energy savings of up to 50% of the electrical consumption of household fridges and freezers.
7. System of water reuse of the water rejected from reverse osmosis equipments.

The electrical appliance of the invention can be mass produced, with the following applications and characteristics:
a) Sanitary hot water generator and accumulator with economic savings that allow a period of investment return which is remarkably shorter than a thermal solar energy recovery facility.
b) Optionally, it is possible to considerably reduce the electrical consumption of the refrigerator and freezer due to the decrease of condensation temperature with a cold water exchanger coming from the tank (between 0 and 15ºC), which is a much lower temperature than that of the average household environment (20ºC) or the temperature of hot water generation (45-55ºC), proposed in other known patents which recover condensation heat.
c) Optionally, it is possible to considerably reduce the electrical consumption of the washing machine and dishwasher, by covering part of the energy sent to the drainage as hot water and whether they are fed by the bithermal system or not.
d) Optionally, it is possible to completely recover the water rejected from the domestic reverse osmosis equipments, achieving great water savings.
e) Optionally, it is possible to achieve important savings in dryers by generating heat to dry clothes and being able to reuse the latent heat of the evaporated water.
f) In summer it is possible to achieve a free environment cooling percentage.

### BRIEF DESCRIPTION OF THE DRAWINGS

The following is a brief description of a series of drawings which will help understand the invention better relating clearly to an embodiment of said invention which is presented as a non-limiting example thereof.

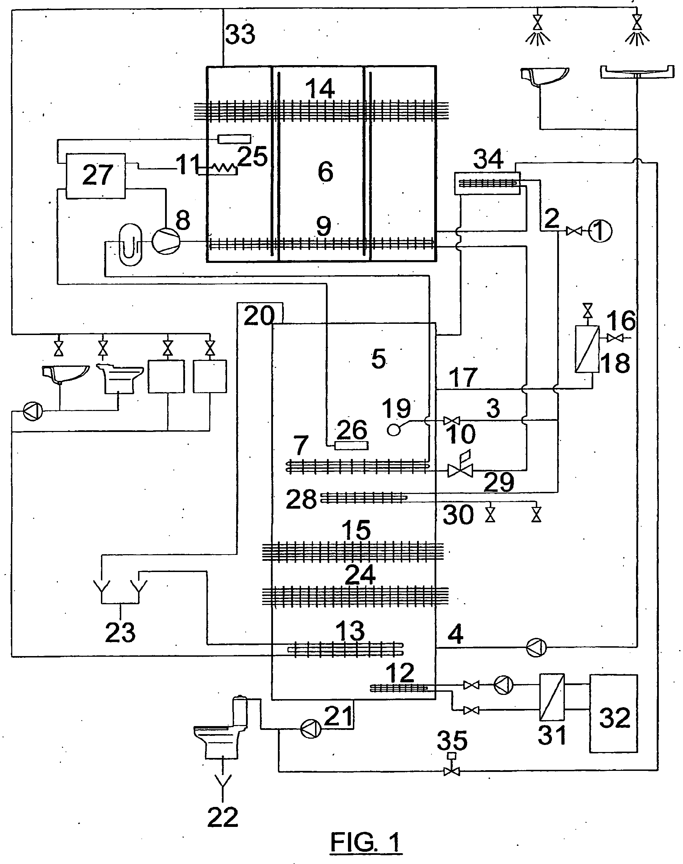

Figure 1 shows a scheme of the electrical appliance of the invention.

### DESCRIPTION OF A PREFERRED EMBODIMENT OF THE INVENTION

The sanitary hot water preparation system proposed by the invention is based on the fact that in households there is consumption of drinking water from the system (1) which is subdivided in two flows, one of sanitary hot water (2) and another one of cold water (3). The electrical appliance has two water tanks, one cold water buffer tank (5) and another one which accumulates sanitary hot water (6), intended to temporally retain the flows to use the surplus heat contained in the buffer tank of cooled water coming from the grey water drainage and transport it to generate hot water, as well as household consumption, thus achieving important energy savings with a considerably simple installation.

Thus, an electrical appliance, as shown in figure 1, comprises the elements and mechanisms needed to achieve the desired functions, with one tap water inlet, one hot water outlet, a grey water inlet and a water outlet into the drainage system.

As shown in the drawing, this unit comprises three basic elements which interact with one another, a refrigerating circuit, a cold water tank (5) and a battery of small sanitary hot water tanks connected in series (6). These basic elements can be enlarged by other mechanisms and elements offering more water and energy saving functions as described below.

The refrigerating circuit comprises an evaporator (7), a refrigerating compressor (8), a condenser (9) and an expansion element (10). The evaporator is introduced in the cold water buffer tank (5) from which heat is extracted; the condenser runs the battery of small sanitary hot water accumulations (6), connected in series, in which the heat extracted from the cold water tank (5) and the heat generated by the compressor is deposited.

The reason why the sanitary hot water is produced in a battery of small accumulations, serially installed, is to prevent the water coming in from being mixed with the water going out, keeping the outlet water with a higher gradient temperature than that of the inlet water. With the same objective, water is stratified, the colder water inlet being located at a lower position and the hot water outlet at a higher position, so that temperature stratification is achieved and the outlet water increases its temperature gradient with respect to that of the inlet.

This hot water circulation system in the tanks enables the set of tanks to be able to supply its whole volume reducing its outlet temperature in less than 10°C.

The condenser is installed in countercurrent to increase its efficiency and cause the hottest gas to be in contact with the last water course and the cold water inlet to increase the sub-cooling of the refrigerating gas.

The equipment has electrical resistances (11), which heats water by Joule effect, and start working only in the following cases:
a) There is a higher consumption of sanitary hot water than the amount that the refrigerating equipment can generate.
b) There is an excessive cooling of the cold water tank.
c) When the user requires it for any other reason, necessity, power increase, damage or other.

Optionally, it is possible to install in the equipment a heat exchanger (12) located in the cold water buffer tank, which will have the function of cooling the water of the refrigerant of the household fridge (32). This produces energy savings for the fridge electrical consumption.

The reason for the energy savings in the electrical consumption of the fridge is that the heat focus of the fridge with this system is colder (between 0ºC and 15ºC) and the fridge compressor reduces its consumption to produce the same amount of cold.

There are known systems that use heat to produce sanitary hot water, but they unfavorably increase the heat tank temperature and fridge consumption.

The optional installation of this exchanger (12) also produces an increase of the sanitary hot water production capacity of the equipment.

Optionally, it is possible to install in the equipment another exchanger (13) to reuse the heat of the waste water coming from:
a- Dishwashers
b- Washing machines
c- Washers
d- Sinks

The system is controlled by an electronic unit that activates accumulation preferably at night (off-peak hours) but enables to activate it if the intelligent unit considers it is necessary to work during peak or high-load hours as well.

In order to be able to make the most of the energy consumed in the production of sanitary hot water, there is a control system of the household indoor temperature and when it is required and the user considers it necessary, for example when the indoor temperature is more than 24±2ºC, then it is allowed to cool down the house for free taking advantage of low temperatures in the cold water tank.

The temperature established and stop and operation orders of the installation are realized according to the following criteria.
a) The equipment starts if:
   a1) It is an off-peak hour and there is a hot water accumulation tank with a temperature lower than 45±5ºC.
   a2) It is a peak hour and the last tank is at a temperature lower than 35±5ºC.
b) The equipment stops if:
   b1) The cold water tank is at a temperature lower than 4±3ºC.
   b2) It is an off-peak hour and all hot water accumulation tanks are at a temperature higher than 45±5ºC.
   b3) It is a peak hour and the last sanitary hot water tank is at a temperature higher than 35±5ºC.
c) The equipment enables to cool the environment if:
   c1) The user is authorized to use this function and there is a temperature higher than the temperature established, for example 23ºC.

The following list includes the components of the invention with their numeric reference:
1. Tap water inlet/ electrical appliance water inlet.
2. Water diversion to hot water tank.
3. Water diversion to cold water tank.
4. Grey water inlet.
5. Cold water tank.
6. Hot water tank.
7. Evaporator.
8. Refrigerating compressor.
9. Condenser.
10. Expansion element.
11. Electrical resistances.
12. Water-to-water heat exchanger (refrigerators).
13. Water-to-water heat exchanger (dirty grey water).
14. Water-to-air heat exchanger (dryer).
15. Water-to-air heat exchanger (dryer).
16. Cold water inlet /Osmosis water inlet.
17. Osmosis rejected water outlet to cold water tank.
18. Osmosis equipment.
19. Minimum control level cold water tank.
20. Surplus cold water outlet to drainage.
21. Cold water outlet of water for consumption, toilets and other uses.
22. Waste water drainage.
23. Grey water drainage.
24. Environmental exchanger.
25. Hot water tank temperature probe.
26. Cold water tank temperature probe.
27. Control element and maneuver.
28. Water-to-water exchanger (tap water heat).
29. Third pipe/Tap water inlet into the exchanger.
30. Cooled water outlet for consumption/Water outlet from the exchanger for consumption.
31. Water-refrigerant exchanger (refrigerator).
32. Refrigerator.
33. Hot water outlet for consumption.
34. Preheating water-to-water heat exchanger (Pre-heater)
35. Automatic shut-off valve.
36. Grey water inlet into the preheating exchanger.

Thus, the invention refers to an electrical appliance producing sanitary hot water comprising:
a refrigerating circuit comprising:
   a hot water tank (6);
   a cold water buffer tank (5);
   an evaporator (7) to evaporate a cooling fluid;
   a condenser (9) to condense a cooling fluid;
   a refrigerating compressor (8) with a refrigerating inlet connected to an evaporator outlet (7) and a refrigerating outlet connected to a condenser inlet (9);
   an expansion element (10) with an expansion inlet connected to a condenser outlet (9) and an expansion outlet connected to an evaporator inlet (7);

The electrical appliance comprises:
a tap water inlet (1) to supply tap water to the electrical appliance;
a first pipe (2) from the tap water inlet (1) to a hot water tank (6) inlet to supply tap water to the hot water tank (6);
a second pipe (3) from the tap water inlet (1) to a cold water tank (5) inlet to supply
tap water to the cold water buffer tank (5);
where:
the cold water buffer tank (5):
   houses the evaporator (7) configured to cool down the water contained in the cold water buffer tank (5) when the cooling fluid in the evaporator (7) absorbs the heat of the water contained in the cold water buffer tank (5), generating cold water for consumption;
has a first consumption cold water outlet (21);
a hot water tank (6):
   houses the condenser (9) configured to heat the water contained in the hot water tank (6) when the heating fluid in the condenser (9) transfers the condensation heat to the water contained in the hot water tank (6), generating hot water for consumption;
   has a consumption hot water outlet (33).

Additionally, the electrical appliance comprises
a third pipe (29) from the tap water inlet (1) to a water-to-water exchanger (28) inlet which has a cooled water outlet for consumption (30);
a waste grey water inlet (4) to supply water to the cold water buffer tank (5);
and a second surplus water outlet for drainage (20);

According to other additional characteristics, the electrical appliance also comprises:
a plurality of heating electrical resistances (11) in the hot water tank (6);
a water-to-water condensation exchanger (12) in the cold water buffer tank (5) configured to cool down the water coming from the condensation of a refrigeration equipment (32) which has transferred its heat in a cooling exchanger (31);
a hot temperature sensor (25) in the hot water tank (6);
a cold temperature sensor (26) in the cold water buffer tank (5);
a level sensor (19) in the cold water buffer tank (5);
control means (27) configured to take readings of the hot temperature sensor (25),
the cold temperature sensor (26), compare the current time with the peak hours and according to said parameters act on an element selected between the compressor (8), the electrical resistances (11) and combinations thereof;
an environmental exchanger (24) configured to take heat from the environment, cooling the environment and heating the water contained in the cold water buffer tank (5) to increase the production capacity of the electrical appliance;
at least one recovery exchanger (13) to collect waste heat from facilities drainage to heat the water contained in the cold water buffer tank (5) to increase the production capacity of the electrical appliance;
a first water-to-air exchanger (14) configured to supply heat to a dryer;
a second water-to-air exchanger (15) configured to collect waste heat from an air outlet of the dryer;
purification means by reverse osmosis comprising:
   a cold water inlet (16) connected to the tap water inlet (1) to supply inlet water to a reverse osmosis equipment;
   a rejected water outlet (17) of the reverse osmosis equipment (18) to send rejected water to the cold water buffer tank (5).

## Claims

1. Electrical appliance producing hot water, comprising:
a refrigerating circuit comprising:
a hot water tank (6);
a cold water buffer tank (5);
an evaporator (7) to evaporate a cooling fluid;
a condenser (9) to condense a cooling fluid;
a refrigerating compressor (8) with a refrigerator inlet connected to an evaporator outlet (7) and a refrigerator outlet connected to a condenser inlet (9);
an expansion element (10) with an expansion inlet connected to a condenser outlet (9) and an expansion outlet connected to an evaporator inlet (7);
the electrical appliance producing hot water comprising:
a tap water inlet (1) to supply tap water to the electrical appliance;
a first pipe (2) from the tap water inlet (1) to an inlet of the hot water tank (6) to supply tap water to the hot water tank (6);
a second pipe (3) from the tap water inlet (1) to an inlet of the cold water tank (5) to supply tap water to the cold water buffer tank (5);
where:
the cold water buffer tank (5):
houses the evaporator (7) configured to cool down the water contained in the cold water buffer tank (5) when the cooling fluid in the evaporator (7) absorbs the heat of the water contained in the cold water buffer tank (5), generating cold water for consumption;
has a first consumption cold water outlet (21);
the hot water tank (6):
has a consumption hot water outlet (33);
houses the condenser (9) configured to heat the water contained in the hot water tank (6) when the heating fluid in the condenser (9) transfers the condensation heat to the water contained in the hot water tank (6), generating hot water for consumption;
said electrical appliance producing hot water **characterized in that**
the cold water buffer tank (5) has a second surplus water outlet for drainage (20);
and **in that** said electrical appliance producing hot water comprises
a third pipe (29) from the tap water inlet (1) to a water-to-water exchanger (28) inlet which has a cooled water outlet for consumption (30);
a waste grey water inlet (4) to supply water to the cold water buffer tank (5).

2. Electrical appliance according to claim 1, **characterized in that** it further comprises a plurality of heating electrical resistances (11) in the hot water tank (6).

3. Electrical appliance according to any of the claims 1-2, **characterized in that** it further comprises:
a water-to-water condensation exchanger (12) in the cold water buffer tank (5) configured to cool down the water coming from the condensation of a refrigeration equipment (32) which has transferred its heat in a cooling exchanger (31).

4. Electrical appliance according to claim 3, **characterized in that** it also comprises:
a plurality of heating electrical resistances (11) in the hot water tank (6);
a hot temperature sensor (25) in the hot water tank (6);
a cold temperature sensor (26) in the cold water buffer tank (5);
a level sensor (19) in the cold water buffer tank (5);
control means (27) configured to make readings of the hot temperature sensor (25), the cold temperature sensor (26), compare the current time with the peak hours and according to said parameters act on an element selected between the compressor (8), the electrical resistances (11) and combinations thereof.

5. Electrical appliance according to any of the claims 1-4, **characterized in that** it further comprises an environmental exchanger (24) configured to take heat form the environment, cooling the environment and heating the water contained in the cold water buffer tank (5) to increase the production capacity of the electrical appliance.

6. Electrical appliance according to any of the claims 1-5, **characterized in that** it further comprises at least one recovery exchanger (13) to collect waste heat from facilities drainage to heat the water contained in the cold water buffer tank (5) to increase the production capacity of the electrical appliance.

7. Electrical appliance according to any of the claims 1-6, **characterized in that** it further comprises:
a first water-to-air exchanger (14) configured to supply heat to a dryer;
a second water-to-air exchanger (15) configured to collect waste heat from an air outlet of the dryer.

8. Electrical appliance according to any of the claims 1-7, **characterized in that** it further comprises purification means by reverse osmosis comprising:
a cold water inlet (16) connected to the tap water inlet (1) to supply inlet water to a reverse osmosis equipment;
a rejected water outlet (17) of the reverse osmosis equipment (18) to send rejected water to the cold water buffer tank (5).

## Patentansprüche

1. Elektrisches Gerät für die Wassererwärmung, umfassend:
einen Kühlkreislauf umfassend:
einen Warmwasserspeicher (6);
einen Kaltwasserzwischenspeicher (5);
einen Verdampfer (7), um eine Kühlflüssigkeit zu verdampfen;
einen Kondensator (9), um eine Kühlflüssigkeit zu kondensieren;
einen Kühlverdichter (8) mit einem Kühlgeräteingang, welcher an einem Verdampferausgang (7) angeschlossen ist, und einem Kühlgerätausgang, welcher an einem Kondensatoreingang (9) angeschlossen ist;
ein Ausdehnungselement (10) mit einem Ausdehnungseingang, welcher an einem Kondensatorausgang (9) angeschlossen ist, und einem Ausdehnungsausgang, welcher an einem Verdampfereingang (7) angeschlossen ist;
wobei das elektrische Gerät für die Wassererwärmung Folgendes umfasst:
einen Leitungswassereingang (1), um dem elektrischen Gerät Leitungswasser zuzuführen;
ein erstes Rohr (2) von dem Leitungswassereingang (1) bis zu einem Eingang des Warmwasserspeichers (6), um dem Warmwasserspeicher (6) Leitungswasser zuzuführen;
ein zweites Rohr (3) von dem Leitungswassereingang (1) bis zu einem Eingang des Kaltwasserspeichers (5), um dem Kaltwasserzwischenspeicher (5) Leitungswasser zuzuführen;
in welchem:
der Kaltwasserzwischenspeicher (5):
den Verdampfer (7) aufnimmt, welcher dazu ausgebildet ist, das im Kaltwasserzwischenspeicher (5) enthaltende Wasser abzukühlen, wenn die Kühlflüssigkeit in dem Verdampfer (7) die Wärme des im Kaltwasserzwischenspeicher (5) enthaltenden Wassers absorbiert, unter Erzeugung von Verbrauchskaltwasser;
einen ersten Verbrauchskaltwasserausgang (21) aufweist;
der Warmwasserspeicher (6):
einen Verbrauchswarmwasserausgang (33) aufweist;
den Kondensator (9) aufnimmt, welcher dazu ausgebildet ist, das im Warmwasserspeicher (6) enthaltende Wasser zu wärmen, wenn die Erwärmungsflüssigkeit in dem Kondensator (9) die Kondensationswärme auf das im Warmwasserspeicher (6) enthaltende Wasser überträgt, unter Erzeugung von Verbrauchswarmwasser;
wobei das genannte elektrische Gerät für die Wassererwärmung **dadurch gekennzeichnet ist, dass**
der Kaltwasserzwischenspeicher (5) einen zweiten Überwasserentwässerungsausgang (20) aufweist;
und dass das genannte elektrische Gerät für die Wassererwärmung ein drittes Rohr (29) von dem Leitungswassereingang (1) bis zu einem Eingang eines Wasser-Wasser-Austauschers (28), welcher einen Ausgang für gekühltes Verbrauchswasser (30) aufweist; und
einen Abwassereingang (4), um dem Kaltwasserzwischenspeicher (5) Wasser zuzuführen, umfasst.

2. Elektrisches Gerät nach Anspruch 1, **dadurch gekennzeichnet, dass** es zusätzlich eine Vielzahl von elektrischen Heizwiderständen (11) in dem Warmwasserspeicher (6) umfasst.

3. Elektrisches Gerät nach einem der Ansprüche 1-2, **dadurch gekennzeichnet, dass** es zusätzlich:
einen Wasser-Wasser-Kondensationsaustauscher (12) in dem Kaltwasserzwischenspeicher (5) umfasst, welcher dazu ausgebildet ist, das aus der Kondensation einer Kühlvorrichtung (32) kommende Wasser, welches dessen Wärme in einem Kühlaustauscher (31) übertragen hat, abzukühlen.

4. Elektrisches Gerät nach Anspruch 3, **dadurch gekennzeichnet, dass** es ebenfalls Folgendes umfasst:
eine Vielzahl von elektrischen Heizwiderständen (11) in dem Warmwasserspeicher (6);
einen Warmtemperaturfühler (25) in dem Warmwasserspeicher (6);
einen Kalttemperaturfühler (26) in dem Kaltwasserzwischenspeicher (5);
einen Füllstandsfühler (19) in dem Kaltwasserzwischenspeicher (5);
Steuerungsmittel (27), welche dazu ausgebildet sind, Ablesungen des Warmtemperaturfühlers (25) und des Kalttemperaturfühlers (26) durchzuführen, die aktuelle Zeit mit den Spitzenstunden zu vergleichen und gemäß den genannten Parametern auf ein Element, ausgewählt aus dem Verdichter (8), den elektrischen Widerständen (11) und Kombinationen derselben, zu wirken.

5. Elektrisches Gerät nach einem der Ansprüche 1-4, **dadurch gekennzeichnet, dass** es zusätzlich einen Umgebungsaustauscher (24) umfasst, welcher dazu ausgebildet ist, Wärme aus der Umgebung zu nehmen, die Umgebung zu kühlen und das im Kaltwasserzwischenspeicher (5) enthaltende Wasser zu wärmen, um die Produktionskapazität des elektrischen Geräts zu erhöhen.

6. Elektrisches Gerät nach einem der Ansprüche 1-5, **dadurch gekennzeichnet, dass** es zusätzlich mindestens einen Rückgewinnungsaustauscher (13) umfasst, zum Entnehmen der Abwärme aus der Entwässerung der Anlagen, um das im Kaltwasserzwischenspeicher (5) enthaltende Wasser zu wärmen, um die Produktionskapazität des elektrischen Geräts zu erhöhen.

7. Elektrisches Gerät nach einem der Ansprüche 1-6, **dadurch gekennzeichnet, dass** es zusätzlich:
einen ersten Wasser-Luft-Austauscher (14), welcher dazu ausgebildet ist,
einem Trockner Wärme zuzuführen; und
einen zweiten Wasser-Luft-Austauscher (15), welcher dazu ausgebildet ist, Abwärme aus einem Luftausgang des Trockners zu nehmen, umfasst.

8. Elektrisches Gerät nach einem der Ansprüche 1-7, **dadurch gekennzeichnet, dass** es zusätzlich Mittel für die Reinigung durch Umkehrosmose umfasst, umfassend:
einen Kaltwassereingang (16), welcher an dem Leitungswassereingang (1) angeschlossen ist, um einer Umkehrosmosevorrichtung Eingangswasser zuzuführen;
einen Ausschusswasserausgang (17) der Umkehrosmosevorrichtung (18), um dem Kaltwasserzwischenspeicher (5) Ausschusswasser zu senden.

## Revendications

1. Appareil électrique pour chauffer de l'eau, comprenant :
un circuit de réfrigération comprenant :
un réservoir d'eau chaude (6) ;
un réservoir tampon d'eau froide (5) ;
un évaporateur (7) pour évaporer un fluide de refroidissement ;
un condensateur (9) pour condenser un fluide de refroidissement ;
un compresseur de réfrigération (8) avec une entrée de réfrigérateur connectée à une sortie d'évaporateur (7) et une sortie de réfrigérateur connectée à une entrée de condensateur (9) ;
un élément d'expansion (10) avec une entrée d'expansion connectée à une sortie de condensateur (9) et une sortie d'expansion connectée à une entrée d'évaporateur (7) ;
l'appareil électrique pour chauffer de l'eau comprenant :
une entrée d'eau du robinet (1) pour fournir de l'eau du robinet à l'appareil électrique ;
une première conduite (2) depuis l'entrée d'eau du robinet (1) vers une entrée du réservoir d'eau chaude (6) pour fournir de l'eau du robinet au réservoir d'eau chaude (6) ;
une deuxième conduite (3) depuis l'entrée d'eau du robinet (1) vers une entrée du réservoir d'eau froide (5) pour fournir de l'eau du robinet au réservoir tampon d'eau froide (5) ;
dans lequel :
le réservoir tampon d'eau froide (5) :
loge l'évaporateur (7) configuré pour refroidir l'eau contenue dans le réservoir tampon d'eau froide (5) lorsque le fluide de refroidissement dans l'évaporateur (7) absorbe la chaleur de l'eau contenue dans le réservoir tampon d'eau froide (5), en générant de l'eau froide pour la consommation ;
a une première sortie d'eau froide de consommation (21) ;
le réservoir d'eau chaude (6) :
a une sortie d'eau chaude de consommation (33) ;
loge le condensateur (9) configuré pour réchauffer l'eau contenue dans le réservoir d'eau chaude (6) lorsque le fluide de réchauffement dans le condensateur (9) transfert la chaleur de condensation à l'eau contenue dans le réservoir d'eau chaude (6), en générant de l'eau chaude pour la consommation ;
ledit appareil électrique pour chauffer de l'eau étant **caractérisé en ce que** le réservoir tampon d'eau chaude (5) a une deuxième sortie d'excédent d'eau pour le drainage (20) ;
et **en ce que** ledit appareil électrique pour chauffer de l'eau comprend une troisième conduite (29) depuis l'entré d'eau du robinet (1) vers une entré d'échangeur d'eau-eau (28) qui a une sortie d'eau refroidie pour la consommation (30) ;
une entrée d'eau grise usée (4) pour fournir de l'eau au réservoir tampon d'eau froide (5).

2. Appareil électrique selon la revendication 1, **caractérisé en ce qu'**il comprend en outre une pluralité de résistances électriques de réchauffement (11) dans le réservoir d'eau chaude (6).

3. Appareil électrique selon l'une quelconque des revendications 1-2, **caractérisé en ce qu'**il comprend en outre :
un échangeur de condensation d'eau-eau (12) dans le réservoir tampon d'eau froide (5) configuré pour refroidir l'eau provenant de la condensation d'un équipement de réfrigération (32) qui a transféré sa chaleur à un échangeur de refroidissement (31).

4. Appareil électrique selon la revendication 3, **caractérisé en ce qu'**il comprend en outre :
une pluralité de résistances électriques de réchauffement (11) dans le réservoir d'eau chaude (6) ;
un capteur de température chaude (25) dans le réservoir d'eau chaude (6) ;
un capteur de température froide (26) dans le réservoir tapon d'eau froide (5) ;
un capteur de niveau (19) dans le réservoir tampon d'eau chaude (5) ;
des moyens de contrôle (27) configurés pour faire des lectures du capteur de température chaude (25), du capteur de température froide (26), comparer le temps actuel avec les heures de pointe et selon lesdits paramètres agir sur un élément choisi parmi le compresseur (8), les résistances électriques (11) et leurs combinaisons.

5. Appareil électrique selon l'une quelconque des revendications 1-4, **caractérisé en ce qu'**il comprend en outre un échangeur environnemental (24) configuré pour prendre de la chaleur de l'environnement, en refroidissant l'environnement et en réchauffant l'eau contenue dans le réservoir tampon d'eau froide (5) pour augmenter la capacité de production de l'appareil électrique.

6. Appareil électrique selon l'une quelconque des revendications 1-5, **caractérisé en ce qu'**il comprend en outre au moins un échangeur de récupération (13) pour collecter la chaleur dissipée du drainage des installations pour réchauffer l'eau contenue dans le réservoir tampon d'eau froide (5) pour augmenter la capacité de production de l'appareil électrique.

7. Appareil électrique selon l'une quelconque des revendications 1-6, **caractérisé en ce qu'**il comprend en outre :
un premier échangeur d'eau-air (14) configuré pour fournir de la chaleur à un séchoir ;
un deuxième échangeur d'eau-air (15) configuré pour collecter la chaleur dissipée d'une sortie d'air du séchoir.

8. Appareil électrique selon l'une quelconque des revendications 1-7, **caractérisé en ce qu'**il comprend en outre des moyens de purification par osmose inverse comprenant :
une entrée d'eau froide (16) connectée à l'entrée d'eau du robinet (1) pour fournir de l'eau d'entrée à un équipement d'osmose inverse ;
une sortie d'eau de rejet (17) de l'équipement d'osmose inverse (18) pour envoyer de l'eau de rejet au réservoir tampon d'eau froide (5).
